# EUROPEAN PATENT APPLICATION

(11) **EP 2 660 113 A1**
(43) Date of publication of application: **06.11.2013**
(21) Application number: 10861446.2
(22) Date of filing: 28.12.2010
(51) Int. Cl.: B60T 8/26, B60T 11/28, B60T 17/04

(54) **BRAKE CONTROL DEVICE OF WHEEL TYPE CONSTRUCTION MACHINE**

(71) Applicant: Volvo Construction Equipment AB, 631 85 Eskilstuna (SE)
(72) Inventor: CHOI, Jin-Youn, Changwon-si Gyeongsangnam-do 631-150 (KR); SON, Young-Jin, Changwon-si Gyeongsangnam-do 642-768 (KR)
(74) Representative: Zimmermann, Tankred Klaus
(86) International application number: PCT/KR2010/009406
(87) International publication number: WO 2012/091193

(57) **Abstract**

Disclosed is a brake device for braking front and rear axles by working oil supplied to front and rear brake cylinders from a hydraulic pump according to the control of a brake pedal. The brake control device of a wheel type construction machine according to the present invention includes: a brake hydraulic pump and a brake pedal; a brake valve, of which a spool is converted according to the control of the brake pedal; a brake device having front and rear brake cylinders, which are driven by working oil supplied at the time of controlling the brake pedal and have different volumes, and front and rear discs to be engaged according to the operation of the front and rear brake cylinders; front and rear axles which are braked by the brake device; and a flow rate control valve mounted on a path between the brake pedal and either the front or rear brake cylinder, whichever has a relatively smaller volume, and distributing and supplying a flow rate to the front and rear brake cylinders according to the control angle of the brake pedal so as to synchronize the front and rear axles at a braking force generating time point.

## Description

### [Field of the Invention]

The present invention relates to a brake control apparatus of a wheel-type construction machine. More particularly, the present invention relates to a brake control apparatus of a wheel-type construction machine in which front and rear axles can be braked by a hydraulic fluid supplied to front and rear brake cylinder pairs from a hydraulic pump according to a manipulation of a brake pedal.

### [Background of the Invention]

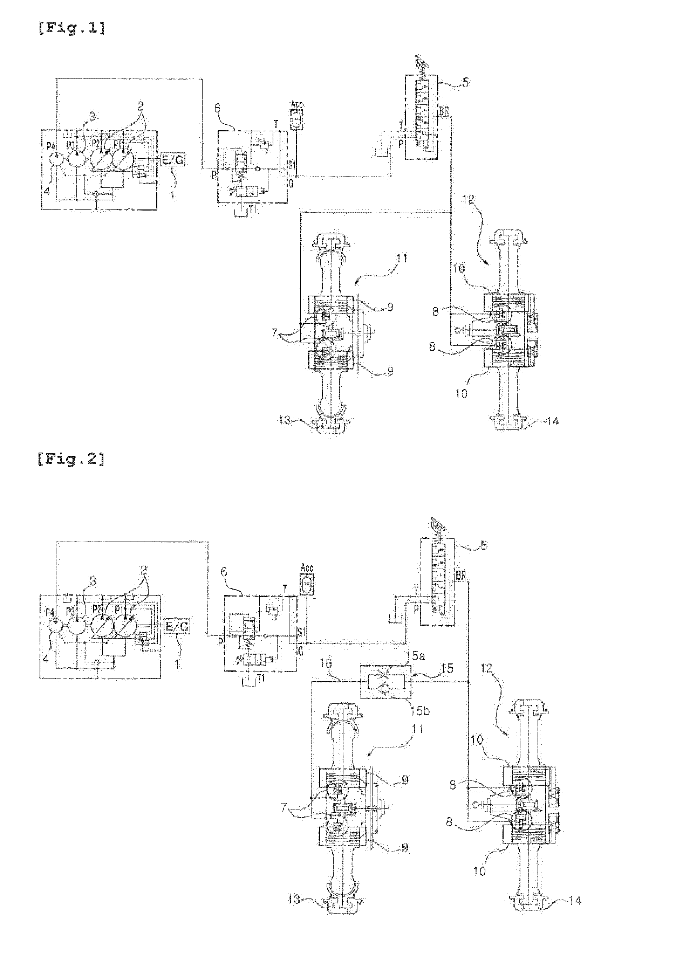

A brake control apparatus of a wheel-type construction machine in accordance with the prior art as shown in Fig. 1 includes: a hydraulic pump 2 for both a work apparatus such as a boom cylinder and a traveling motor, a hydraulic pump 3 for steering, upper swing and bulldozing, and a brake hydraulic pump 4 , the hydraulic pumps being connected to an engine 1;
a brake pedal 5 configured to generate a secondary pressure in proportion to a pressure applied by an operator;
a brake valve 6 mounted in a flow path between the brake hydraulic pump 4 and the brake pedal 5 and including a spool configured to be shifted according to the manipulation of the brake pedal 5;
front and rear brake devices 11 and 12, the front brake device 11 including a pair of front brake cylinders 7 and a pair of front brake disks 9, and the rear brake device 12 including a pair of rear brake cylinders 8 and a pair of rear brake disks 10, the front and rear brake cylinder pairs 7 and 8 being driven by a hydraulic fluid supplied when the brake pedal 5 is manipulated, and, each of the front and rear brake disks pairs 9 and 10 being engaged with each other according to the drive of each of the front and rear brake cylinder pairs 7 and 8; and
front and rear axles 13 and 14 configured to be braked by the front and rear brake devices 11 and 12.

In the brake control apparatus of a wheel-type construction machine as constructed above, in the case where an operator manipulates the brake pedal 5 during its operation, when a brake toque is not generated to correspond to a manipulation angle of the brake pedal 5, the operator steps on the brake pedal 5 by increasing a pressure to be applied to the brake pedal 5.

For this reason, a sudden brake torque is generated instantaneously to decrease a braking shock and a braking feeling. This occurs when the front and rear brake cylinder pairs 7 and 8 have different volumes from each other, and the hydraulic fluid is not sufficiently supplied to the front and rear brake cylinder pairs 7 and 8 via the brake pedal 5 in proportion to a manipulation force of the brake pedal 5.

In other words, in the case where the brake pedal 5 is manipulated to a certain level to exhibit a braking force that comes up to an operator's expectation, a secondary pressure of the brake pedal 5 corresponding to a manipulation angle of the brake pedal 5 is linearly formed and a sufficient discharge flow rate of the hydraulic fluid is sufficiently supplied to the front and rear brake cylinder pairs 7 and 8 from the brake hydraulic pump 4 via the brake pedal 5. For this reason, there is occurs a change in the volume of the front and rear brake cylinder pairs 7 and 8 to correspond to the secondary pressure of the brake pedal 5, so that the two front brake disks 9 and the two rear brake disks 10 are engaged with each other, respectively, and thus a linear brake torque is not generated.

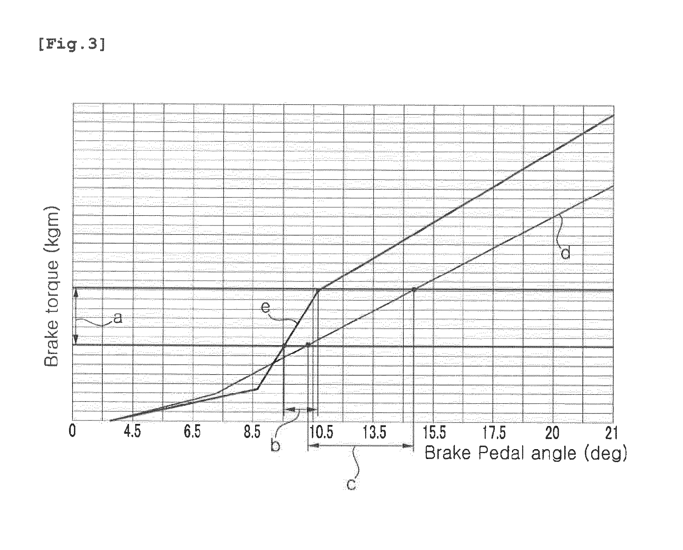

As shown in Fig. 3, a braking performance expected by an operator allows the generation of a linear braking force to be expected from an initial manipulation range in which the brake pedal 5 is manipulated (see a line "e" of a graph in Fig. 3). On the other hand, if the volumes of the front brake cylinders 7 are different from those of the rear brake cylinders 8 and a sufficient flow rate of the hydraulic fluid is not supplied to the front and rear brake cylinder pairs 7 and 8 via the brake pedal 5, the hydraulic fluid is not smoothly distributed to the front and rear brake cylinder pairs 7 and 8.

For this reason, between the front and rear brake cylinder pairs 7 and 8, the front brake cylinders 7 with a relatively smaller volume start to generate a braking force first, and the rear brake cylinders 8 with a relatively larger volume start to generate the braking force later.

As such, at an early stage of the braking operation, an operator steps on the brake pedal 5 with a stronger force in order to secure a greater braking force in a state in which a braking force needed by the operator is not sufficiently secured. Accordingly, the braking force instantaneously deviates from a brake pedal manipulation angle range in which a front braking force and a rear braking force are generated simultaneously, and at the same time, a high braking force is generated, thereby causing a problem in that a shock is generated due to a sudden brake torque.

Meanwhile, the conventional brake control apparatus also entails a problem in that a manipulation angle range "b" of the brake pedal 5 is decreased sharply contrary to the operator's intention in a deceleration section "a" of the front and rear braking devices, thus having a difficulty in a precise control of the brake devices.

### [Detailed Description of the Invention]

### [Technical Problems]

Accordingly, the present invention was made to solve the aforementioned problem occurring in the prior art, and it is an object of the present invention to provide a brake control apparatus of a wheel-type construction machine in which a hydraulic fluid is effectively distributedly supplied to front and rear brake cylinder pairs having different volumes from each other in the front and rear brake devices, and the initial braking force generation time points of front and rear axles can be synchronized with each other.

Another object of the present invention is to provide a brake control apparatus of a wheel-type construction machine in which a manipulation angle range of a brake pedal can be secured in a deceleration section of front and rear braking devices.

### [Technical Solution]

To accomplish the above object, in accordance with an embodiment of the present invention, there is provided a brake control apparatus of a wheel-type construction machine, including:
a brake hydraulic pump connected to an engine;
a brake pedal configured to generate a secondary pressure in proportion to a pressure applied by an operator;
a brake valve mounted in a flow path between the hydraulic pump and the brake pedal and including a spool configured to be shifted according to the manipulation of the brake pedal;
front and rear brake devices, the front brake device including a pair of front brake cylinders and a pair of front brake disks, and the rear brake device including a pair of rear brake cylinders and a pair of rear brake disks, the front and rear brake cylinder pairs being driven by a hydraulic fluid supplied when the brake pedal is manipulated and having different volumes from each other, and, each of the front and rear brake disks pairs being engaged with each other according to the drive of each of the front and rear brake cylinder pairs;
front and rear axles configured to be braked by the front and rear brake devices; and
a flow rate control valve mounted in a flow path between the brake pedal and the front or rear brake cylinder pair with a relatively smaller volume, and configured to distributedly supply a flow rate of the hydraulic fluid according to a manipulation angle of the brake pedal to the front and rear brake cylinder pairs to thereby synchronize the braking force generation time points of the front and rear axles with each other.

In accordance with a more preferable embodiment, the flow rate control valve may include: an orifice mounted in the flow path; and a check valve mounted in the flow path so as to be connected with the orifice connected with the orifice in parallel and configured to allow for a flow of the hydraulic fluid returned to a hydraulic tank from the front or rear brake cylinder pair of the relatively smaller volume.

The flow control valve may extend an allowable brake manipulation period within a braking zone.

### [Advantageous Effect]

The brake control apparatus of a wheel-type construction machine in accordance with an embodiment of the present invention as constructed above has the following advantages.

When the wheel-type construction machine is braked by the front and rear brake devices during its operation, a braking force of the brake devices according to an intention of an operator is allowed to be generated for simultaneous application to the front and rear axles, thereby reducing a shock generated during the braking of the construction machine.

In addition, a manipulation angle range of the brake pedal can be secured in a deceleration section of the front and rear braking devices, thereby improving a braking performance according to an operator's intention.

### [Brief Description of the Invention]

The above objects, other features and advantages of the present invention will become more apparent by describing the preferred embodiments thereof with reference to the accompanying drawings, in which:
Fig. 1 is a schematic view showing a brake control apparatus of a wheel-type construction machine in accordance with the prior art;
Fig. 2 is a schematic view showing a brake control apparatus of a wheel-type construction machine in accordance with the present invention; and
Fig. 3 is a graph showing a brake pedal manipulation angle range in a braking section in accordance with the prior art and an embodiment of the present invention in a brake control apparatus of a wheel-type construction machine.

### * Explanation on reference numerals of main elements in the drawings *

- 1:: engine
- 4:: brake hydraulic pump
- 5:: brake pedal
- 6:: brake valve
- 7:: front brake cylinder
- 8:: rear brake cylinder
- 9:: front brake disk
- 10:: rear brake disk
- 11, 12:: brake device
- 13:: front axle
- 14:: rear axle
- 15:: flow rate control valve
- 15a:: orifice
- 15b:: check valve
- 16:: flow path

### [Preferred Embodiments of the Invention]

Now, preferred embodiments of the present invention will be described in detail with reference to the accompanying drawings. The matters defined in the description, such as the detailed construction and elements, are nothing but specific details provided to assist those of ordinary skill in the art in a comprehensive understanding of the invention, and the present invention is not limited to the embodiments disclosed hereinafter.

A brake control apparatus of a wheel-type construction machine in accordance with an embodiment of the present invention as shown in Fig. 2 includes:
a brake hydraulic pump 4 connected to an engine 1;
a brake pedal 5 configured to generate a secondary pressure in proportion to a pressure applied by an operator;
a brake valve 6 mounted in a flow path between the hydraulic pump 4 and the brake pedal 5 and including a spool configured to be shifted according to the manipulation of the brake pedal 5;
front and rear brake devices 11 and 12, the front brake device 11 including a pair of front brake cylinders 7 and a pair of front brake disks 9, and the rear brake device 12 including a pair of rear brake cylinders 8 and a pair of rear brake disks 10, the front and rear brake cylinder pairs 7 and 8 being driven by a hydraulic fluid supplied when the brake pedal 5 is manipulated and having different volumes from each other (in this case, the volumes of the front brake cylinders 7 are smaller than those of the rear brake cylinders 8), and, each of the front and rear brake disks pairs 9 and 10 being engaged with each other according to the drive of each of the front and rear brake cylinder pairs 7 and 8;
front and rear axles 13 and 14 configured to be braked by the front and rear brake devices 11 and 12; and
a flow rate control valve 15 mounted in a flow path 16 between the brake pedal 5 and the front brake cylinder pair 7 with a relatively smaller volume, and configured to distributedly supply a flow rate of the hydraulic fluid according to a manipulation angle of the brake pedal 5 to the front and rear brake cylinder pairs 7 and 8 to thereby synchronize the braking force generation time points of the front and rear axles 13 and 14 with each other.

The flow rate control valve 15 includes: an orifice 15a mounted in the flow path 16; and a check valve 15b mounted in the flow path so as to be connected with the orifice connected with the orifice 15a in parallel and configured to allow for a flow of the hydraulic fluid returned to a hydraulic tank from the front brake cylinder pair 7 of the relatively smaller volume.

The flow control valve 15 extends an allowable brake manipulation period within a braking zone.

In this case, the configuration of the remaining elements of the brake control apparatus as shown in Fig. 2 except the flow rate control valve 15 consisting of the orifice 15a mounted in the flow path 16 and the check valve 15b is the same that as of the brake control apparatus as shown in Fig. 1, and thus the detailed description of the configuration and operation thereof will be omit to avoid redundancy and like hydraulic parts described redundantly are denoted by like reference numerals.

Hereinafter, a use example of the brake control apparatus of a wheel-type construction machine in accordance with an embodiment of the present invention will be described in detail with reference to the companying drawings.

As shown in Figs. 2 and 3, when an operator manipulates the brake pedal 5 and then steps on a travel pedal, the hydraulic fluid discharged from the front brake cylinder 7 is smoothly returned to the hydraulic tank due to a narrow opening of the orifice 15a mounted in the flow path 16.

In this case, two front brake disks 9 are maintained in a state of being engaged with each other due to some of the hydraulic fluid remained in the front brake cylinder pair 7. When the construction machine is traveled in this state, the front brake device 11 may be damaged due to heat generated from the front axle 13 and early abrasion of the front brake disk 9.

At this time, the hydraulic fluid discharged from the front brake cylinder pair 7 can be smoothly returned to the hydraulic tank by the check valve 15b mounted in the flow path 16.

Meanwhile, the hydraulic fluid is supplied to the front and rear brake cylinder pairs 7 and 8 from the brake hydraulic pump 4 via the brake pedal 5. In this case, the volumes of the two front brake cylinders 7 are smaller than those of the two rear brake cylinders 8.

By virtue of this configuration, an operation in which the hydraulic fluid is supplied to the front brake cylinder pair 7 via the brake pedal 5 and then the orifice 15a with reduced cross-sectional area in the flow path 16 to brake the front axle 13 is performed at the same time as an operation in which the hydraulic fluid is supplied to the rear brake cylinder pair 8 via the brake pedal 5 to brake the rear axle 14.

Thus, even in the case where the hydraulic fluid is not sufficiently supplied to the front and rear brake cylinder pairs 7 and 8 in proportion to the manipulation angle of the brake pedal 5, it is sufficiently distributedly supplied to the front and rear brake cylinder pairs 7 and 8 having different volumes from each other via the brake pedal 5 through the flow rate control valve 15. For this reason, the hydraulic fluid passing through the brake pedal 5 is supplied to the front and rear brake cylinder pairs 7 and 8 having different volumes from each other to thereby synchronize the initial braking force generation time points at which the front and rear axles 13 and 14 are braked.

In the meantime, a manipulation angle range (indicated by "c" of a graph in Fig. 3) of the brake pedal 5 can be secured in a deceleration section "a" of the front and rear braking devices, thereby improving a braking performance according to an operator's intention.

While the present invention has been described in connection with the specific embodiments illustrated in the drawings, they are merely illustrative, and the invention is not limited to these embodiments. It is to be understood that various equivalent modifications and variations of the embodiments can be made by a person having an ordinary skill in the art without departing from the spirit and scope of the present invention. Therefore, the true technical scope of the present invention should not be defined by the above-mentioned embodiments but should be defined by the appended claims and equivalents thereof.

### [Industrial Applicability]

As described above, according to the brake control apparatus of a wheel-type construction machine in accordance with an embodiment of the present invention,

When the wheel-type construction machine is braked by the front and rear brake devices during its operation, the hydraulic fluid is smoothly distributedly supplied to the front and rear brake cylinder pairs having different volumes from each other to remove the braking force response difference (i.e. , charging response time delay) to cause the initial braking force generation time points of the front and rear axles to be synchronized with each other according to an intention of an operator thereby reducing a shock generated during the braking of the construction machine.

In addition, a manipulation angle range of the brake pedal can be secured in a deceleration section of the front and rear braking devices, thereby improving a braking performance according to an operator's intention.

## Claims

1. A brake control apparatus of a wheel-type construction machine comprising:
a brake hydraulic pump connected to an engine;
a brake pedal configured to generate a secondary pressure in proportion to a pressure applied by an operator;
a brake valve mounted in a flow path between the hydraulic pump and the brake pedal and including a spool configured to be shifted according to the manipulation of the brake pedal;
front and rear brake devices, the front brake device including a pair of front brake cylinders and a pair of front brake disks, and the rear brake device including a pair of rear brake cylinders and a pair of rear brake disks, the front and rear brake cylinder pairs being driven by a hydraulic fluid supplied when the brake pedal is manipulated and having different volumes from each other, and, each of the front and rear brake disks pairs being engaged with each other according to the drive of each of the front and rear brake cylinder pairs;
front and rear axles configured to be braked by the front and rear brake devices; and
a flow rate control valve mounted in a flow path between the brake pedal and the front or rear brake cylinder pair with a relatively smaller volume, and configured to distributedly supply a flow rate of the hydraulic fluid according to a manipulation angle of the brake pedal to the front and rear brake cylinder pairs to thereby synchronize the braking force generation time points of the front and rear axles with each other.

2. The brake control apparatus according to claim 1, wherein the flow rate control valve comprises an orifice mounted in the flow path and a check valve 1mounted in the flow path so as to be connected with the orifice in parallel and configured to allow for a flow of the hydraulic fluid returned to a hydraulic tank from the front or rear brake cylinder pair of the relatively smaller volume.

3. The brake control apparatus according to claim 1, wherein the flow control valve extend an allowable brake manipulation period within a braking zone.
